Europäisches Patentamt

European Patent Office

Office européen des brevets

(11) Veröffentlichungsnummer: **0 491 084 A1**

# EUROPÄISCHE PATENTANMELDUNG

(21) Anmeldenummer: **90124829.4**

(22) Anmeldetag: **19.12.90**

(51) Int. Cl.5: **H04L 7/10**, H04L 7/04

(43) Veröffentlichungstag der Anmeldung:
**24.06.92 Patentblatt 92/26**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Höck, Günter, Dipl.-Ing.**
**Balanstrasse 69**
**W-8000 München 90(DE)**

(54) Vorrichtung zum Erzeugen von Synchronsignalen zur Blocksynchronisation blockcodierter Datentelegramme mit Offset-Wörtern und deren Verwendung.

(57) Bei zyklischen Blockcodes, wie z. B. beim Radio-Daten-System, muß zur Blocksynchronisation der Beginn eines jeden Blockes festgestellt werden. Dazu dienen die in jedem Block enthaltenen Offset-Wörter. Um bei Übertragungsfehlern die Blocksynchronisation nicht außer Tritt geraten zu lassen, ist es üblich mit einem sog. Schwungradmechanismus fehlende Offset-Wörter zu ersetzen. Die Vorrichtung weist im wesentlichen einen Blockphasenzähler, einen Offset-Wortdetektor, einen Offset-Wortspeicher, eine Logikanordnung zum Ermitteln eines auf ein gültiges Offset-Wort nachfolgenden Offset-Wortes sowie eine Vergleichseinrichtung auf. In der Vergleichseinrichtung wird ein empfangenes Offset-Wort mit einem zuvor von der Logikanordnung generierten Offset-Wort verglichen und bei Übereinstimmung ein Synchronsignal erzeugt.

Die Erfindung bezieht sich auf eine Vorrichtung zum Erzeugen von Synchronsignalen zur Blocksynchronisation blockcodierter Datentelegramme mit Offset-Wörtern und auf deren Verwendung.

Es sind mittlerweile Datenübertragungssysteme bekannt, bei denen die zu übertragende Information in Blöcke aufgeteilt ist. Werden diese Blöcke in nur einem Übertragungskanal seriell übertragen, besteht auf der Empfängerseite die Notwendigkeit den Beginn eines jeden Blockes festzustellen. Dies wird als Blocksynchronisation bezeichnet. Bei zyklischen Blockcodes dient ein spezielles Datenwort das sogenannte Offset-Wort, dazu, auf der Empfängerseite die Blocksynchronisation zu ermöglichen. Solche zyklischen Blockcodes werden beispielsweise beim Radio-Daten-System (RDS) verwendet.

Nähere Einzelheiten zum Radio-Daten-System (RDS) sind beispielsweise der "Spezifikation des Radio-Daten-Systems (RDS)", deutsche Fassung prEN 50067 : 1988 vom Deutschen Institut für Normung e.V. zu entnehmen, die im Beuth-Verlag GmbH, Berlin, erschienen ist. Wie empfängerseitig solche RDS-Signale empfangen werden können, ist beispielsweise aus dem EBU review-technical no. 204 (April 1984) "Design principals for VHF/FM radio receivers using the EBU radio-data system RDS" bekannt.

Die Struktur der RDS-Signale weist als größtes Element eine sogenannte "Gruppe" auf, welche aus 104 Datenbits besteht. Jede Gruppe umfaßt vier Blöcke zu je 26 Datenbits. Jeder dieser Blökke enthält ein Informationswort, das aus 16 Bit besteht, und ein aus 10 Datenbits bestehendes Prüfwort. Das Prüfwort dient hauptsächlich dazu, dem Empfänger bzw. Dekoder zu ermöglichen, Übertragungsfehler zu erkennen und zu korrigieren. Das Prüfwort ist die Modulo-2-Summe aus:

a) dem Rest nach Multiplikation des 16-Bit-Informationswortes mit $x^{10}$ und anschließender Division (mod2) durch ein vorgegebenes Generatorpolynom $g(x)$ und

b) einer 10-Bit-Binärfolge, die das Offset-Wort darstellt. Die Offset-Worte sind für jeden Block innerhalb einer Gruppe unterschiedlich. Bei RDS-Signalen sind dies die Offset-Worte A, B, C, C' und D.

Das Offset-Wort wird hinzugefügt, um die Block- und Gruppensynchronisation im Empfänger bzw. Decoder zu ermöglichen. Die Datenübertragung ist voll synchron und es gibt keine Lücken zwischen den Gruppen oder Blöcken.

Der Empfänger prüft nun nach jedem eingetroffenen Datenbit die Prüfbits des vorliegenden 26-Datenbit langen Datenwortes auf ein gültiges Offset-Wort. Wird n x 26 Taktzyklen später (n = positive ganze Zahl) wieder ein gültiges Offset-Wort erkannt, so deutet dies daraufhin, daß der Empfänger synchronisiert ist. Das Auftreten von gültigen Offset-Wörtern allein kann aber zur Blocksynchronisation nicht direkt verwendet werden, da wegen Übertragungsfehler einzelne oder mehrere Datenbits falsch oder gar nicht übertragen werden können. Es ist deshalb notwendig, mit einer Art elektronischem "Schwungrad" für die Blocksynchronisation zu arbeiten, um unechte Synchronisationsimpulse zu unterdrücken und fehlende einzufügen. Dies ist dem Fachmann aus den eingangs genannten Veröffentlichungen hinlänglich bekannt, so daß hier nicht darauf eingegangen zu werden braucht.

Im allgemeinen sollte die Blocksynchronisation blockcodierter Datentelegramme folgenden Forderungen genügen.:

- Das Einrasten des Schwungrades soll schnell erfolgen.
- Das Einrasten des Schwungrades soll sicher erfolgen, nur im Blockabstand empfangene Offset-Wörter sollten zum Einrasten des Schwungrades führen, und
- durch Übertragungsfehler entstandene, neue Offset-Wörter sollten als ungültig erkannt werden und kein Einrasten des Schwungrades ermöglichen.

Der Erfindung liegt die Aufgabe zugrunde, eine Vorrichtung anzugeben, mit der diese Forderungen erfüllbar sind.

Diese Aufgabe wird durch eine Vorrichtung mit den Merkmalen des Anspruchs 1 gelöst.

Weiterbildungen der Erfindung sind Gegenstand der Unteransprüche.

Eine vorteilhafte Verwendung der erfindungsgemäßen Vorrichtung ergibt sich in einem RDS-Rundfunkempfänger zur Steuerung des Einrastvorganges der Blocksynchronisation.

Die Erfindung wird im folgenden anhand eines Blockschaltbildes näher erläutert.

Die Vorrichtung weist im wesentlichen einen Offset-Wortdetektor OD, einen Offset-Wortspeicher OS, einen Blockphasenzähler BZ, eine noch genauer zu erläuternde Logikanordnung LA sowie eine Vergleichseinrichtung VE auf. Die Datenbits eines Datentelegramms gelangen über die Zuleitung DATA an den Offset Wortdetektor OD. Das zum Datentelegramm gehörende Taktsignal wird über die Zuleitung CLOCK dem Offset-Wortdetektor OD, dem Offset-Wortspeicher OS, dem Blockphasenzähler BZ sowie der Vergleichseinrichtung zugeführt. Eine Ausgangsklemme a1 des Offset-Wortdetektors OD ist mit der Vergleichseinrichtung VE in Verbindung und eine zweite Ausgangsklemme a2 des Offset-Wortdetektors OD an einen Setzeingang SET1 eines ersten Flip-Flops FF1 angeschlossen. An dieser Ausgangsklemme a2 ist ein Signal OFG abgreifbar, das anzeigt, ob ein gültiges Offset-Wort im Offset-Wortdetektor OD erkannt wurde. Die erste Ausgangsklemme a1 des Offset-Wortdetektors OD ist zusätzlich an eine Eingangsklemme e3 des Offset-Wortspeichers OS angeschlossen. Zwischen eine Ausgangsklemme a3 des Offset-Wortspeichers OS und der Vergleichseinrichtung VE ist die Logikanordnung LA geschaltet. Weiterhin ist eine Ausgangsklemme a10 des ersten Flip-Flops FF1 an eine Eingangsklemme e11 eines Oder-Gliedes OR angeschlossen, deren andere Eingangsklemme e12 von einem Rücksetzsignal RS beaufschlagbar ist. Der Ausgang dieses Oder-Gliedes OR ist mit dem Blockphasenzähler BZ verbunden. Der Blockphasenzähler BZ weist eine Ausgangsklemme a20 auf, an der ein Signal MAX abgreifbar ist, das anzeigt, daß der Blockphasenzähler seinen Maximalwert erreicht hat. Dieses Signal MAX gelangt über eine Zuleitung an den Setzeingang SET2 eines zweiten Flip-Flops FF2, an deren Ausgangsklemme a11 ein Signal ENBLOCK zur Freigabe der Vergleichseinrichtung VE abgreifbar ist. Die beiden Flip-Flops FF1 und FF2 können über das bereits erwähnte Rücksetzsignal RS an ihren Rücksetzeingängen RESET1, RESET2 zurückgesetzt werden.

Die Vergleichseinrichtung VE weist eine Ausgangsklemme a7 auf, an der ein Synchronsignal SY abgreifbar ist, das beispielsweise das Einrasten eines Schwungradmechanismusses steuert. Die Vergleichseinrichtung VE kann - wie in der FIG dargestellt - eine sogenannte Latchanordnung LATCH aufweisen, die sowohl mit der Ausgangsklemme a1 des Offset-Wortdetektors OD als auch der Ausgangsklemme a4 der Logikanordnung LA verbunden ist. Zusätzlich gelangt an die Latchanordnung LATCH das bereits erwähnte Taktsignal CLOCK. Diese Latchanordnung LATCH dient, wie noch detailliert ausgeführt werden wird, zur Speicherung des am ersten Ausgangs a1 des Offset-Wortdetektors OD anstehenden Offset-Wortes OW1 als auch des am Ausgang a4 der Logikanordnung LA anstehenden Offset-Wortes OW2. Die beiden Offset-Wörter OW1, OW2 stehen am Ausgang der Latchanordnung LATCH zur Verfügung und werden einem Komparator KO zugeführt. Das ausgangsseitige Signal des Komparators KO gelangt zur Ausgangsklemme a7 der Vergleichseinrichtung. Zusätzlich ist ein UND-Gatter UND vorgesehen, an dessen Ausgang ein Steuersignal ENABLE abgreifbar ist, das den Komparator KO freigibt bzw. verriegelt. Eine Eingangsklemme e13 dieses UND-Gatters UND ist in diesem Ausführungsbeispiel von einem von der Latchanordnung LATCH kommenden Signal ENOF beaufschlagt, das anzeigt, ob ein gültiges Offset-Wort vom Offset-Wortspeicher OS entnommen worden ist, während eine andere Eingangsklemme e14 des UND-Gatters UND mit der Ausgangsklemme a11 des zweiten Flip-Flops FF2 in Verbindung steht.

Der Blockphasenzähler BZ dient dem Zählen von empfangenen Datenbits zum Erzeugen des Signales MAX, sobald eine vorgegebene Anzahl von Datenbits, die einer Blocklänge entsprechen, gezählt wurde. Bei einem RDS-Datensignal besteht eine Blocklänge aus 26 Datenbits. Das Signal MAX wird dann aktiv, wenn der Blockphasenzähler BZ seinen Maximalwert erreicht. Der Blockphasenzähler BZ läuft über, wenn nach dem Maximalwert ein weiterer Taktimpuls des Taktsignales CLOCK anliegt und startet erneut bei seinem Anfangswert.

In den Offset-Wortdetektor OD laufen die Datenbits sequentiell ein. Bei RDS-Datensignalen sind im Offset-Wortdetektor stets 26 Datenbits gespeichert. Mit jedem neuen Taktimpuls wird ein neues Datenbit in den Offset-Wortdetektor OD geschoben, während ein 26 Takte vorher eingelesenes Datenbit aus dem Offset-Wortdetektor herausgeschoben wird. Im einfachsten Fall besteht der Offset-Wortdetektor OD aus einem Schieberegister, das 26 Bit lang ist. Der Offset-Wortdetektor OD dient dazu, um nach jedem neuen empfangenen Datenbit an seinem ersten Ausgang a1 ein Offset-Wort OW1 bereitzustellen, das aus den im Offset-Wortdetektor OD gerade befindlichen 26 Datenbits ermittelt wird. Beim Auftreten eines gültigen Offset-Wortes OW1 wird das Signal OFG, das an der zweiten Ausgangsklemme a2 des Offset-Wortdetektors anliegt, logisch 1 und damit das erste Flip-Flop FF1 gesetzt. Dadurch wird der Blockphasenzähler BZ gestartet.

Der Offset-Wortspeicher OS dient zum Speichern der im Offset-Wortdetektor OD ermittelten Offset-Wörter, gleichgültig ob dies gültige Offset-Wörter oder nichtgültige Offset-Wörter sind. Jedes am ersten Ausgang a1 des Offset-Wortdetektors OD anstehende Offset-Wort OW1 gelangt an die Eingangsklemme e3 des Offset-Wortspeichers OS, der die detektierten Offset-Wörter für mindestens eine Blocklängendauer speichert. Die Mindestlänge des Offsetwort-Speichers ist gleich der Blocklänge. Der Offset-Wortspeicher kann z. B. ein Schieberegister mit einer FIFO-Struktur oder ein durch den Blockphasenzähler BZ adressierbarer Speicher mit wahlfreiem Zugriff sein. Im Offset-Wortspeicher sind, damit sämtliche Möglichkeiten abgedeckt werden können, bei RDS-Datensignalen 26 Worte zu je 10 Bit abgespeichert. Die Offset-Wörter werden damit für mindestens die Dauer einer Blocklänge im Offset-Wortspeicher OS gespeichert.

Die Ausgangsklemme a3 des Offset-Wortspeichers OS ist mit dem Eingang der Logikanordnung LA in Verbindung. Diese Logikanordnung dient dazu, ein Offset-Wort zu berechnen, das dem gerade am Ausgang des Offset-Wortspeichers OS anstehendem Offset-Wort nachfolgt. Damit wird aus dem am Eingang der Logikanordnung LA anliegendem Offset-Wort das zu diesem, im Abstand der Blocklänge nächste zu erwartende Offset-Wort ermittelt. Dieses Offset-Wort ist mit OW2 bezeichnet.

Die Wirkungsweise der erfindungsgemäßen Vorrichtung stellt sich wie folgt dar. Im Offset-Wortdetektor OD werden für jedes neue Datenbit die Prüfbits des vorliegenden 26 bit breiten Datenwertes auf ein gültiges Offset-Wort hingeprüft. Wird ein gültiges Offset-Wort detektiert, so wird das Signal OFG an der zweiten Ausgangsklemme a2 des Offsetwortdetektors OD aktiv und das erste Flip-Flop FF1 gesetzt. Folglich wird auch der Blockphasenzähler BZ auf seinen Anfangswert gesetzt. Der Blockphasenzähler BZ kann erst wieder vom ersten Flip-Flop FF1 zurückgesetzt werden, wenn dieses bei dem Eintreffen eines erneuten OFG-Signales vom Rücksetzsignal RS zurückgesetzt worden ist. Am Ausgang a1 steht das aus dem 26 bit breiten Datenwort ermittelte Offset-Wort OW1 an, egal ob es ein gültiges oder ein nichtgültiges Offset-Wort ist.

Das Rücksetzsignal RS kann entweder beim Einschalten der Vorrichtung oder durch ein Rücksetzsignal von einer Schwungradsteuerung kommen.

Das Offset-Wort OW1, das am Ausgang a1 des Offset-Wortdetektors OD ansteht, wird in den Offset-Wortspeicher OS geschrieben und dort für mindestens eine Blocklänge gespeichert. Während einer Blocklänge können aber weitere Offset-Wörter im Offset-Wortdetektor OD erkannt werden, was beispielsweise auf Übertragungsfehler zurückzuführen ist. Darüber hinaus können Fehler zu Beginn des Datenempfangs auftreten, bis das erste gülte Offset-Wort empfangen wird. Im Offset-Wortspeicher OS können daher während einer Blockdauer mehrere Offset-Wörter abgelegt sein. Erscheint nach einem erstmaligen Erreichen des Blocksphasenzähler-Maximalwertes am Ausgang des Offset-Wortspeichers OS ein Offsetwort, so können folgende Fälle eintreten:

a) Das am Ausgang a3 des Offset-Wortspeichers OS anstehende Offset-Wort war ein gültiges Offset-Wort. Wenn keine Übertragungsfehler aufgetreten sind, detektiert der Offset-Wortdetektor OD als nächstes ein Offset-Wort, das auf das zuvor empfangene Offset-Wort folgen muß, beispielsweise nach einem Offset-Wort A das Offsetwort B.

b) Im zweiten Fall steht am Ausgang des Offset-Wortspeichers OS kein gültiges Offsetwort, also bei RDS-Signalen weder A, B, C, C' noch D. Damit detektiert der Offset-Wortdetektor OD als nächstes mit großer Wahrscheinlichkeit auch kein gültiges Offset-Wort.

Zur Auswertung dieser beiden Fälle wird die Logikanordnung LA zur Berechnung des nächsten zu erwartenden Offsetwortes und die Vergleichseinrichtung VE benötigt. In der Logikanordnung LA wird das nächste zu erwartende Offset-Wort ermittelt. Dieses Offset-Wort OW2 wird mit dem an der Ausgangsklemme a1 des Offset-Wortdetektors OD anstehendem Offset-Wort OW1 in der Vergleichseinrichtung VE verglichen. Sind die beiden Offsetwörter OW1 und OW2 identisch, so wird am Ausgang a7 der Vergleichseinrichtung VE ein Ausgangssignal abgreifbar sein, das auf eine Synchronisierung hinweist. Dieses Signal kann zur Steuerung eines Schwungradmechanismusses benutzt werden, beispielsweise zum Einrasten des Schwungrades. Sind dagegen die beiden Offset-Wörter OW1 und OW2 nicht identisch, so wurde kein Blockanfang erkannt. Es liegt damit kein Synchronismus vor.

Liegen während einer Blocklänge mehrere gültige Offset-Wörter im Offset-Wortspeicher OS vor, wird erstmalig an der Ausgangsklemme a7 ein Synchronsignal SY anliegen, wenn das zu erwartende Offset-Wort OW2 am Ausgang der Logikanordnung LA gleich dem Offset-Wort OW1 am Ausgang a1 des Offset-Wortdetektors OD ist.

Die Vergleichseinrichtung VE wird nur freigegeben, wenn ein gültiges Offset-Wort vom Offset-Wortspeicher OS entnommen wurde. Dies kann z. B. durch ein zusätzliches Bit gekennzeichnet werden, das jedem Offset-Wort des Offset-Wortspeichers OS hinzugeführt wird. Dieses zusätzliche Bit könnte bei RDS-Signalen, bei dem die Offset-Wörter jeweils 10 Bit-lang sind, durch ein 11. Bit realisiert werden. In der FIG ist dieses Signal mit ENOF bezeichnet.

Mit der erfindungsgemäßen Vorrichtung zum Erzeugen von Synchronsignalen zur Blocksynchronisation blockcodierter Datentelegramme werden also die detektierten Offset-Wörter um eine Blocklänge verzögert. Anschließend wird in der Logikanordnung LA das nächste zu erwartende Offset-Wort berechnet und diese Offset-Wort OW2 mit einem eintreffenden Offset-Wort OW1 verglichen. Durch diese Prinzip kann ein schnellstmögliches Einrasten eines Schwungradmechanismus mit großer Sicherheit erfolgen.

Beim Ausrasten des Schwungradmechanismus wird über ein Rücksetzsignal RESET das zweite Flip-Flop FF2 rückgesetzt und damit die Vergleichseinrichtung VE verriegelt. Somit werden im Offset-Wortspeicher OS stehende Offset-Wörter unwirksam. Werden die im Offset-Wortspeicher stehenden Offset-Wörter durch das Rücksetzsignal RESET gelöscht, kann das zweite Flip-Flop FF2 entfallen.

Der oben erwähnte Schwungradmechanismus kann beispielsweise durch einen Zähler realisiert sein. Bei RDS-Signalen kann der Zähler 26 Zustände, was der Blocklänge entspricht, annehmen.

Beim Auftreten eines Synchronsignales SY an der Ausgangsklemme a7 der Vergleichseinrichtung VE wird dieser Zähler auf seinen Anfangswert zurückgesetzt. Nach Erreichen eines Maximalzustandes, hier 26, läuft der Zähler über und beginnt wieder von neuem zu zählen. Mit jedem Überlauf wird im Datentelegramm ein Blockanfang erkannt. Durch das Synchronsignal SY am Ausgang der Vergleichseinrichtung VE kann der Zähler definiert einrasten. Sollte aufgrund von Übertragungsfehlern einmal kein Offset-Wort detektiert werden können, zählt der Zähler selbsttätig weiter. Der Blockanfang wird dann bei Erreichen des Maximalwertes des Zählers angenommen. Damit ist eine Art Schwungrad realisiert.

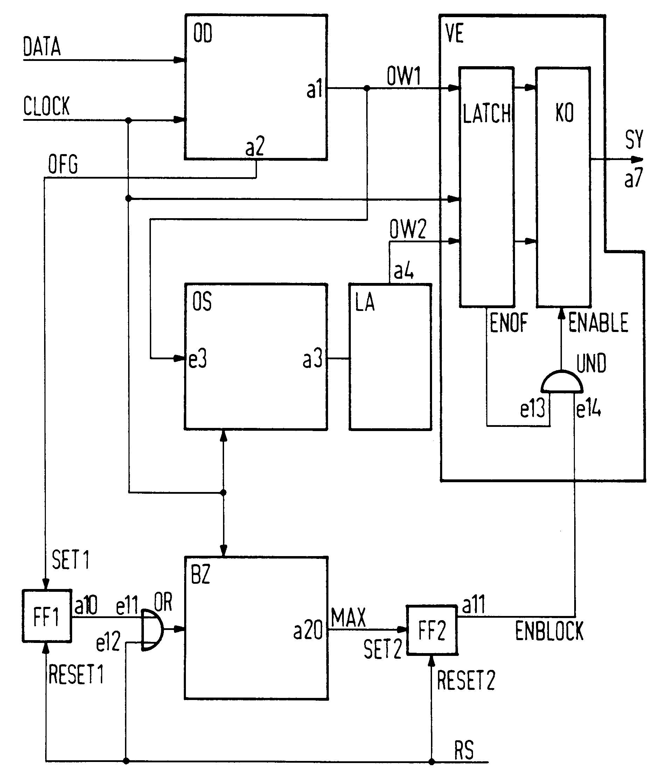

**Patentansprüche**

1. Vorrichtung zum Erzeugen von Synchronsignalen zur Blocksynchronisation blockcodierter Datentelegramme mit Offset-Wörtern mit mindestens folgenden Merkmalen:
   - einen Blockphasenzähler (BZ) zum Zählen von empfangenen Datenbits und zum Erzeugen eines Signales (MAX), sobald eine vorgegebene Anzahl n von Datenbits, die einer Blocklänge entsprechen, gezählt wurde;
   - einen Offset-Wortdetektor (OD), um nach jedem empfangenen Datenbit an seinem Ausgang (a1) ein Offset-Wort (OW1) bereitzustellen, wobei beim Auftreten eines gültigen Offset-Wortes (OW1) der Blockphasenzähler (BZ) auf seinen Anfangswert setzbar ist;
   - einen Offset-Wortspeicher (OS) zum Speichern des Offset-Wortes (OW1) für mindestens die Dauer einer Blocklänge;
   - eine Logikanordnung (LA) zum Ermitteln und Bereitstellen eines auf ein im Offset-Wortspeicher (OS) gespeicherten gültigen Offset-Wortes (OW1) nachfolgenden gültigen Offset-Wortes (OW2); und
   - eine Vergleichseinrichtung (VE), um das am Ausgang (a1) des Offset-Wortdetektors (OD) abgreifbare Offset-Wort (OW1) mit dem an einem Ausgang (a4) der Logikanordnung (LA) abgreifbaren Offset-Wort (OW2) zu vergleichen und bei Übereinstimmung ein Synchronsignal (SY) an ihrem Ausgang (a7) zu erzeugen.

2. Vorrichtung nach Anspruch 1,
   **dadurch gekennzeichnet,**
   daß das Synchronsignal (SY) zur Einraststeuerung eines Schwungradmechanismus vorgesehen ist, durch den fehlende Blocksynchronisationssignale ergänzbar sind.

3. Vorrichtung nach Anspruch 1 oder 2,
   **dadurch gekennzeichnet,**

daß der Offset-Wortspeicher (OS) aus einem Schieberegister mit einer FIFO-Struktur besteht.

4. Vorrichtung nach Anspruch 1 oder 2,
   **dadurch gekennzeichnet,**
   daß der Offset-Wortspeicher (OS) ein vom Blockphasenzähler (BZ) adressierbarer Speicher mit wahlfreiem Zugriff ist.

5. Vorrichtung nach einem der Ansprüche 1 bis 4,
   **dadurch gekennzeichnet,**
   daß Mittel (UND) vorgesehen sind, die Vergleichseinrichtung (VE) freizugeben.

6. Vorrichtung nach einem der Ansprüche 1 bis 5,
   **dadurch gekennzeichnet,**
   daß ein erstes Flip-Flop (FF1) vorgesehen ist, dessen Setzeingang (SET1) mit einem Ausgang (a2) des Offset-Wortdetektors (OD) verbunden ist, an dem angezeigt wird, ob ein Offset-Wort (OW1) gültig ist, und dessen Rücksetzeingang (RESET) von einem Rücksetzsignal (RS) beaufschlagbar ist, wobei eine Ausgangsklemme (a10) des Flip-Flops (FF1) über eine Eingangsklemme (e11) eines Oder-Gliedes (OR) mit dem Blockphasenzähler (BZ) verbunden ist, wobei eine andere Eingangsklemme (e12) des ODER-Gliedes (OR) vom Rücksetzsignal (RS) beaufschlagbar ist.

7. Vorrichtung nach einem der Ansprüche 1 bis 6,
   **dadurch gekennzeichnet,**
   daß ein zweites Flip-Flop (FF2) vorgesehen ist, dessen Setzeingang (SET2) vom Signal (MAX) des Blockphasenzählers (BZ) und dessen Rücksetzeingang (RESET) vom Rücksetzsignal (RS) beaufschlagbar ist, wobei dessen Ausgangsklemme (a11) mit der Vergleichseinrichtung (VE) verbunden ist.

8. Verwendung der Vorrichtung nach einem der Ansprüche 1 bis 7 in einem RDS-Rundfunkempfänger zur Steuerung des Einrastvorganges der Blocksynchronisation.

Europäisches
Patentamt

**EUROPÄISCHER RECHERCHENBERICHT**

Nummer der Anmeldung

EP    90 12 4829

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 230 066 (S.A. LA RADIOTECHNIQUE INDUSTRIELLE ET COMMERCIALE) --- | 1,2,5,8 | H04L7/10 H04L7/04 |
| Y | EP-A-0 230 066 (S.A. LA RADIOTECHNIQUE INDUSTRIELLE ET COMMERCIALE) * Seite 1, Zeile 15 - Seite 2, Zeile 23 * * Seite 2, Zeile 31 - Seite 3, Zeile 2 * * Seite 4, Zeile 20 - Seite 4, Zeile 32 * * Seite 5, Zeile 16 - Seite 8, Zeile 3 * * Seite 12, Zeile 14 - Seite 13, Zeile 11 * --- | 3,4,6,7 | |
| Y | GB-A-2 156 189 (GENERAL ELECTRIC COMPANY) * Seite 1, Zeile 29 - Seite 1, Zeile 51 * * Seite 1, Zeile 96 - Seite 1, Zeile 98 * * Seite 2, Zeile 2 - Seite 2, Zeile 52 * * Seite 2, Zeile 91 - Seite 2, Zeile 111 * --- | 3,6,7 | |
| A | DE-B-1 193 086 (TELEFUNKEN) * Spalte 1, Zeile 36 - Spalte 2, Zeile 17 * * Spalte 2, Zeile 39 - Spalte 3, Zeile 2 * * Spalte 4, Zeile 17 - Spalte 5, Zeile 5 * --- | 1-8 | **RECHERCHIERTE SACHGEBIETE (Int. Cl.5 )** |
| Y | GB-A-2 172 176 (OKI ELECTRIC INDUSTRY CO LTD) * Seite 1, Zeile 54 - Seite 1, Zeile 81 * * Seite 2, Zeile 59 - Seite 2, Zeile 87 * * Seite 3, Zeile 40 - Seite 3, Zeile 99 * * Seite 3, Zeile 107 - Seite 3, Zeile 125 * ----- | 4 | H04L |

**Der vorliegende Recherchenbericht wurde für alle Patentansprüche erstellt**

| Recherchenort | Abschlußdatum der Recherche | Prüfer |
|---|---|---|
| DEN HAAG | 28 AUGUST 1991 | VAN DEN BERG J.G.J. |